# EUROPEAN PATENT APPLICATION

(11) **EP 4 506 584 A1**
(43) Date of publication of application: **12.02.2025**
(21) Application number: 23191000.1
(22) Date of filing: 11.08.2023
(51) Int. Cl.: F16D 65/00, B01D 46/00, B01D 46/44, B01D 46/46

(54) **FILTER SYSTEM FOR ONE OR MORE BRAKING DEVICES OF A VEHICLE AND METHOD OF OPERATION THEREOF**

(71) Applicant: MANN+HUMMEL Ventures Pte. Ltd., Singapore 139234 (SG)
(72) Inventor: WÖRZ, Tobias, 71636 Ludwigsburg (DE); JESSBERGER, Thomas, 71636 Ludwigsburg (DE); FALLBÖHMER, Stefan, 71636 Ludwigsburg (DE); WÖBER, Alexander, 71636 Ludwigsburg (DE)
(74) Representative: Mann + Hummel Intellectual Property

(57) **Abstract**

In one aspect the invention relates to a filter system (100) for one or more braking devices (200) of a vehicle, the filter system comprising: a suction device (110) configured to generate an airflow (112) in a vicinity of the one or more braking devices; a filter element (120) for filtering brake dust particles generated by the one or more braking devices; an airflow channel (130) positioned to allow the airflow generated by the suction device through the filter element; a controller (140) for operating the suction device; and at least one processor (150) arranged in data communication with the controller, the processor configured to receive at least one of a vehicle operation data (162) and an environmental data (164) as inputs, and determine a prognosis of a braking event of the vehicle; wherein the at least one processor is configured to generate a control data (152), the control data indicative of an operation state of the suction device based on the prognosis of the braking event of the vehicle.

In a further aspect the invention relates to a method (900) of operating a filter system (100).

## Description

### TECHNICAL FIELD

The present disclosure relates to a filter system for one or more braking devices of a vehicle and method of operation thereof.

### BACKGROUND ART

The following discussion of the background art is intended to facilitate an understanding of the present disclosure only. It should be appreciated that the discussion is not an acknowledgement or admission that any of the material referred to was published, known or is part of the common general knowledge of the person skilled in the art in any jurisdiction as of the priority date of the disclosure.

Brake dust particles produced by wear on the brake pads of the disc brakes of motor vehicles may be collected or filtered using a filtration device. Such filtration device is typically useful in preventing the brake dust particles, which may be harmful to the environment or to health, from escaping into the environment or becoming lodged on/in the rims of wheels of the vehicles.

Currently, a filter system for brake dust particles comprises a suction device provided together with a filter element in a vicinity of braking devices for vehicle wheels. The suction device may then be used to generate airflow comprising air enriched with the brake dust particles through the filter element.

However, a vehicle often operates under different road conditions and environmental conditions. For example, a vehicle may be operating in a congested traffic condition with relatively close proximity to other vehicles, which requires intermittent on/off braking. In some instances, the vehicle may deviate from its intended travel path, which may result in sudden braking when the operator of the vehicle realizes such deviation(s).

Besides operating and driving conditions, other conditions such as weather, may affect the braking intensity of the vehicle. For example, rainy weather may require a vehicle to brake harder in order to achieve a complete stop or a matching distance.

Such events may increase pollutant concentration surrounding the vehicles impacting air quality.

Accordingly, there exists a need for an improved filter system for use with one or more braking devices of a vehicle, that seeks to address at least one of the aforementioned issues.

### SUMMARY

The disclosure was conceptualized to provide an improved filter system for use with one or more braking devices of a vehicle. The filter system may be an active brake dust particle filter system having a suction device. The filter system comprises a processor, the processor configured to obtain vehicle operation data from onboard sensors installed on the vehicle to determine one or more probabilities of braking events. It is contemplated in a vehicle there may be a filter system associated with a braking device, for example as a one to one correspondence, or a common filter system may filter the particles coming from two or more braking devices.

The onboard sensors may include, for example, one or more of a radar sensor, a light detection and ranging (lidar) sensor, an optical sensor, an inclination sensor, an image sensor, a proximity sensor, a sonar sensor, or another equivalent sensor. These onboard sensors may be configured to obtain sensor data, such as operation data of the vehicle and the environmental data surrounding the vehicle, to prognose the braking events. The prognosis may include a probability parameter or value indicative of a likelihood of the vehicle braking.

According to one aspect of the disclosure, there is provided a filter system for one or more braking devices of a vehicle, the filter system comprising: a suction device configured to generate an airflow in a vicinity of the one or more braking devices; a filter element for filtering brake dust particles generated by the one or more braking devices; an airflow channel positioned to allow the airflow generated by the suction device through the filter element; a controller for operating the suction device; and a processor arranged in data communication with the controller, the processor configured to receive at least one of a vehicle operation data and an environmental data as inputs, and determine a prognosis of a braking event of the vehicle. The processor may be configured to generate a control data, the control data indicative of an operation state of the suction device based on the prognosis of the braking event of the vehicle. The control data may be sent to the controller as an input data, the controller configured to convert the input data to a drive signal to operate the suction device.

In some embodiments, the vehicle comprises at least one sensor, the at least one sensor arranged in data communication with the processor and configured to obtain the environment data and/or the vehicle operation data.

In some embodiments, the at least one sensor comprises at least one onboard sensor.

In some embodiments, the onboard sensor comprises one or more of the following: a radar sensor, a light detection and ranging (lidar) sensor, an optical sensor, an inclination sensor, an image sensor, a proximity sensor, and a sonar sensor.

In some embodiments, the at least one onboard sensor is used to obtain or derive a traffic data, a weather data, or a combination thereof.

In some embodiments, the at least one onboard sensor is configured to obtain or derive at least one of the following data: an auto-navigation data, a driving assistance data, an anti-lock braking system (ABS) data, an electric power steering (EPS) data, a lane assistant data, a blind spot assistant data, a trailer condition data, a brake pedal level, and a throttle level data.

In some embodiments, the at least one of a vehicle operation data and an environmental data comprises a first parameter indicative of whether the vehicle has deviated from an intended travel path, a second parameter indicative of whether the vehicle is in proximity with one or more objects, and a third parameter indicative of the vehicle speed or velocity. The third parameter may be used to derive further parameters such as acceleration, i.e. rate of change of speed or velocity.

In some embodiments, upon a positive determination, based on the first parameter, that the vehicle has deviated from the intended travel direction, or the positive determination, based on the second parameter, that the vehicle is less than or equal to a pre-determined distance with respect to one or more objects, the prognosis of a braking event is determined to be a first probability of the braking event.

In some embodiments, the first probability may be chosen from a range of 0.8 to 1, for example, the first probability may be a probability value of 0.8. In some embodiments, the first probability may be a probability value of 0.9.

In some embodiments, the control data associated with the first probability value is indicative of a full operation state of the suction device.

In some embodiments, the control data (152) associated with the first probability value is indicative of a pre-conditioning state (711) of the suction device (110).

In some embodiments, the vehicle operation data comprises at least one of a driving mode data and a location data.

In some embodiments, the control data is sent to the controller, the control data being configured to operate the suction device at a pre-conditioning state in a positive determination that the probability is above a second probability value.

In some embodiments, the second probability value is in a range of 0.5 to 0.7. The second probability value may be a probability value of 0.5.

In some embodiments, the pre-conditioned state has a relatively higher suction intensity compared to an idle state.

In some embodiments, the one or more braking devices comprise at least one frictional braking device.

In some embodiments, the airflow channel comprises a duct system, a hose, a housing, and/or one or more combinations of the aforementioned.

In some embodiments the processor comprises a brake probability estimator, the brake probability estimator configured to receive the vehicle operation data and/or the environmental data to calculate or derive a probability value of the braking event of the vehicle, and to generate the control data based on the probability value of the braking event.

In some embodiments, the suction device comprises a motor, the motor comprises a driver circuit configured to receive the control data from the controller and drive the motor based on the control data or adjust a rotational frequency of the motor based on the control data to change the airflow. The driver circuit may be configured to do one or conditionally both of driving the motor and adjusting the rotational frequency.

An aspect concerns a vehicle comprising one or more braking devices and a filter system positioned in a vicinity of the one or more braking devices, the filter system comprising a suction device to generate an airflow in the vicinity of the one or more braking devices, an airflow channel positioned to direct airflow generated by the suction device through a filter element; the filter element positioned to filter brake dust particles generated by the one or more braking devices within the airflow, the filter system comprising at least one processor; and a memory having instructions stored therein, the instructions, when executed by the at least one processor, cause the at least one processor to: receive at least one of a vehicle operation data and an environmental data as inputs, and determine a prognosis of a braking event of the vehicle; wherein the processor is configured to generate a control data indicative of an operation state of the suction device, the control data being based on the prognosis of the braking event of the vehicle.

According to another aspect of the disclosure there is a method of operating a filter system for one or more braking devices of a vehicle to filter brake dust particles generated by the one or more braking devices, the method comprising: obtaining, by a processor, at least one of a vehicle operation data and an environmental data as input; determining, by the processor, a prognosis of a braking event of the vehicle as output; and generating, by the processor, a control data indicative of an operation state of the filter system or a suction device thereof, the control data configured based on the prognosis of a braking event of the vehicle.

According to another aspect of the disclosure, there is a computer program product, comprising software instructions installed thereon, such that when executed on the processor, executes the steps of the described method.

### BRIEF DESCRIPTION OF DRAWINGS

The disclosure will be better understood with reference to the detailed description when considered in conjunction with the non-limiting examples and the accompanying drawings, in which:
- FIG. 1 shows an exemplary schematic illustration of a filter system 100 for one or more braking devices of a vehicle;
- FIGS. 2A, 2B, and 2C show various exemplary schematic illustrations of an active brake dust particle filter system configured to remove brake dust particles from a plurality of frictional braking devices;
- FIGS. 3A and 3B show schematic illustrations of some embodiments showing the suction device as an electric blower to generate an airflow of the active brake dust particle filter based on the control data(s) from a motor controller.
- FIGS. 4A and 4B show schematic illustrations of various configurations of processors and control units in a vehicle forming part of the filter system and interfacing with other components of the vehicle;
- FIGS. 5A and 5B show two possible configurations of a central communication interface or unit of a vehicle;
- FIG. 6A shows an exemplary schematic illustration of a vehicle installed with the filter system 100 and equipped with onboard sensors; FIG. 6B shows an exemplary schematic illustration of a vehicle installed with the filter system 100 and configured to obtain data from remote sensors and/or servers;
- FIG. 6C shows an exemplary schematic illustration of a vehicle installed with the filter system 100 and configured to obtain data from a server or other cars in a direct vehicle-to-vehicle data connection;
- FIG. 6D shows a schematic block diagram of the onboard sensors and the vehicle operation data and environmental data that may be obtained, derived or calculated from the onboard sensors;
- FIG. 7A is a flow chart depicting a method for estimating or determining the probability of the vehicle braking based on the vehicle operation data and environmental data;
- FIG. 7B is a rotational frequency versus time graph for illustrating the different operation states of a suction device;
- FIG. 7C shows various examples of driving modes and types of braking;
- FIG. 7D shows a particular embodiment of a brake probability estimator;
- FIGS. 8A is a flow chart of a method for estimating a probability of braking within a pre-determined time;
- FIG. 8B is an illustration of traffic information used in the various embodiments for determining a probability of braking; and
- FIG. 9 is a flow chart depicting a method 900 of operating a filter system of FIG. 1.

### DETAILED DESCRIPTION

The following detailed description refers to the accompanying drawings that show, by way of illustration, specific details, and embodiments in which the disclosure may be practiced. These embodiments are described in sufficient detail to enable those skilled in the art to practice the disclosure. Other embodiments may be utilized, and structural, and logical changes may be made without departing from the scope of the disclosure. The various embodiments are not necessarily mutually exclusive, as some embodiments can be combined with one or more other embodiments to form new embodiments.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the", and the term "at least one" as used with regard to a feature or element include a reference to one or more of the features or elements. As used herein, the term "and/or" includes any and all combinations of one or more of the associated listed items.

As used herein, the term "associate", "associated", and "associating" indicate a defined relationship (or cross-reference) between at least two items.

Throughout the description, the term "vehicle", as used herein, refers to a motor-powered vehicle, for example having 2, 3, 4, or more wheels. Examples of the vehicle include a passenger car, a truck, a bus, a lorry, or a rail vehicle, for example, a locomotive, a wagon. In some embodiments, the vehicle may be an electric vehicle or a hybrid (internal combustion engine and electrical) vehicle. In some embodiments, the vehicle may be an internal combustion engine (ICE) vehicle (i.e., non-hybrid). The term vehicle may further include autonomous vehicles.

Throughout the description, the term "braking device", as used herein, includes a frictional brake but excludes hydrodynamic brakes such as parachutes. In some embodiments, a frictional brake may comprise two solids entering into contact, for example, a braking pad (or shoe) may contact a brake disc, a drum, or a wheel. With the contact, kinetic energy is converted into heat energy, and brake dust particles, in the form of particulate matter is generated due to the friction. It is to be appreciated that the braking device may exclude regenerative braking, so that the various brake stages and data are free of regenerative braking data.

Throughout the description, the term "filter element", as used herein, refers to an element for filtering brake dust particles generated by one or more braking devices. The filter element may include a particulate filter, for filtering particles suspended in air, for example, to filter out airborne particulate matter (PM) particles of various particle size distributions, such as PM10, PM5, PM2.5, or PM1. In some embodiments, the filter element may be a fine dust filter. In some embodiments, the filter element may form part of a filter unit to separate the harmful particles (e.g. PM10) from the air which would pollute the environment. In some embodiments, the filter element may comprise or may be formed from or of nonwoven fibers. The term filter unit may comprise at least one filter element.

Throughout the description, the term "suction device" as used herein, may broadly refers to any airflow generation unit configured to generate an airflow near the brake system via an airflow channel through a filter unit or filter element to separate the harmful particles (e.g. PM10) from the air which would pollute the environment. In some embodiments, the suction device may comprise a blower operating as a centrifugal pump, velocity pump, or a fan configured to generate an airflow based on a negative pressure formed in an enclosed housing for filtering air enriched with the brake dust particles.

Throughout the description, the term "processor(s)", as used herein, includes one or more electrical circuits capable of processing data, i.e. processing circuits. A processor may include analog circuits or components, digital circuits or components, or hybrid circuits or components. Any other kind of implementation of the respective functions which will be described in more detail below may also be understood as a "circuit" in accordance with an alternative embodiment. A digital circuit may be understood as any kind of a logic implementing entity, which may be special purpose circuitry or a processor executing software stored in a memory, or a firmware.

Throughout the description, the term "module" refers to, or forms part of, or include an Application Specific Integrated Circuit (ASIC); an electronic circuit; a combinational logic circuit; a field programmable gate array (FPGA); a processor (shared, dedicated, or group) that executes code; other suitable hardware components that provide the described functionality; or a combination of some or all of the above, such as in a system-on-chip. The term module may include memory (shared, dedicated, or group) that stores code executed by the processor.

Throughout the description, the term "data" may be understood to include information in any suitable analog or digital form, for example, provided as a file, a portion of a file, a set of files, a signal or stream, a portion of a signal or stream, a set of signals or streams, and the like. The term data, however, is not limited to the aforementioned examples and may take various forms and represent any information as understood in the art. The term "operating data" may be understood to include any data associated with the operation of a vehicle over a time period. Non-limiting examples include speed/velocity data, braking frequency data, braking intensity data, traffic condition data, environmental data, time of day, and/or other driving data or derivative data of the aforementioned operating data.

Throughout the description, the term "brake probability estimator" may be understood to refer to one or more electrical circuits, processors, remote server, or combinations thereof. In some embodiments, the brake probability estimator may be an onboard circuit of the vehicle forming part of a motor controller of a suction device of an active brake dust particle filter. In some embodiments, the brake probability estimator may be an artificial intelligence (Al) based or machine learning (ML) based module for inclusion in any of a vehicle's onboard controllers or the motor controller. The Al or ML-based module may be trained offline via supervised learning, unsupervised learning, and/or hybrid learning methods.

Throughout the description, the term "obtain", as used herein, refers to the processor which actively obtains the inputs, or passively receives inputs from one or more sensors or data source. The term obtain may also refer to a processor, which receives or obtains inputs from a communication interface, e.g. a user interface. The processor may also receive or obtain the inputs via a memory, a register, and/or an analog-to-digital port.

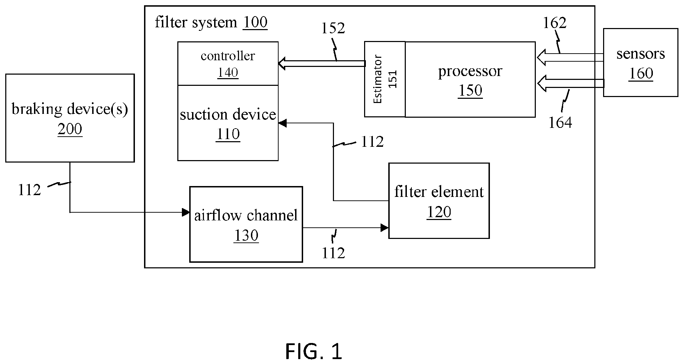

FIG. 1 shows a schematic block diagram of a filter system 100 for use with one or more braking devices 200 of a vehicle. The filter system 100 may comprise a suction device 110 configured to generate an airflow 112 in a vicinity of the one or more braking devices 200; a filter element 120 for filtering brake dust particles generated by the one or more braking devices 200; an airflow channel 130 positioned to allow the airflow 112 generated by the suction device 110 through the filter element 120, a controller 140 for operating the suction device 110; and a processor 150 arranged in data communication with the controller 140, the processor 150 configured to receive at least one of a vehicle operation data 162 and an environmental data 164 as inputs, and determine a prognosis of a braking event of the vehicle as output; wherein the processor 150 is configured to generate a control data 152 to the controller 140, the control data 152 based on the prognosis of the braking event of the vehicle. In some embodiments, each braking device 200 of a vehicle may comprise an associated filter system 100. For example, in a vehicle having 4 braking devices 200 may have 4 associated filter system 100. Each associated filter system may be independent from other filter system 100, with its dedicated logic and control.

In various embodiments, the processor 150 may comprise a brake estimator module 151. The estimator module 151 may include a prognosis engine for estimating a likelihood of a braking event occurring within a pre-determined time period. The likelihood may be expressed as one or more probability estimates of a braking event occurring based on the vehicle operation data 162 and/or environmental data 164 surrounding the vehicle.

In some embodiments, the vehicle comprises at least one sensor 160, the at least one sensor arranged in data communication with the processor 150 and configured to obtain the environmental data 164 and/or the vehicle operation data 162.

In some embodiments, the at least one sensor 160 comprises at least one onboard sensor. The at least one sensor 160 may be a hardware sensor, a software sensor, or a combination of hardware and software sensors. The at least one sensor 160 may include onboard sensors to sense any environmental conditions around the vehicle that can affect whether the vehicle is about to execute a braking operation. Such environmental conditions may include traffic conditions.

In various embodiments, the controller 140 may be integrated with the processor 150 to form an integrated processing module. In other words, the processor, estimator module 151, and the controller 140 may be integrated to form a single unit. In such an embodiment, the generated control data 152 may be converted to a drive signal for driving a motor of the suction device 110 of the filter system 100.

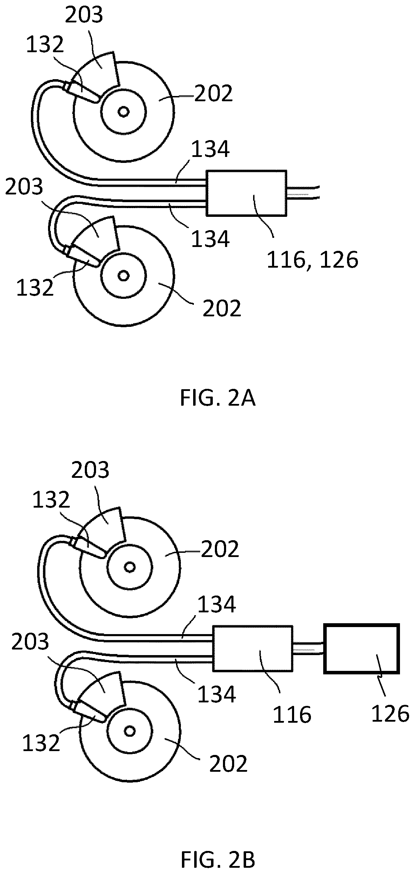

In the embodiment of FIG. 2A, a schematic illustration of a part of a vehicle, with particular emphasis on braking devices 200 of the vehicle interacting with the filter system 100 implemented as an active brake dust particle filter, is shown.

Two braking devices in the form of frictional braking devices, are shown, each with a brake disc 202 and brake pads 203. The airflow channel 130 comprises a suction nozzle 132 positioned at each braking device near the brake disc 202 and brake pads 203. The suction nozzle 132 may be shaped and dimensioned to suck brake dust particles from the brake disc 102 and brake pads 103 when the suction device 110 is enabled during a braking event, i.e. when the brake pads 203 contact the brake disc 202. Each suction nozzle 132 is fluidly connected to the suction device 110 via suction hoses 134. The suction nozzle 132 may be connected to a housing 116, which preferably contains the suction device 110 for generating the airflow (suction flow) for extracting the brake dust particles from the brake pads 103 or the brake discs 102. In FIG. 2A, the housing 116 may further include a filter unit 126, which in turn houses one or more filter elements 120.

As an alternative arrangement shown in FIG. 2B, with respect to the airflow direction, a filter unit 126, which houses one or more filter elements 120, may be positioned downstream the housing 116 which houses the suction device 110.

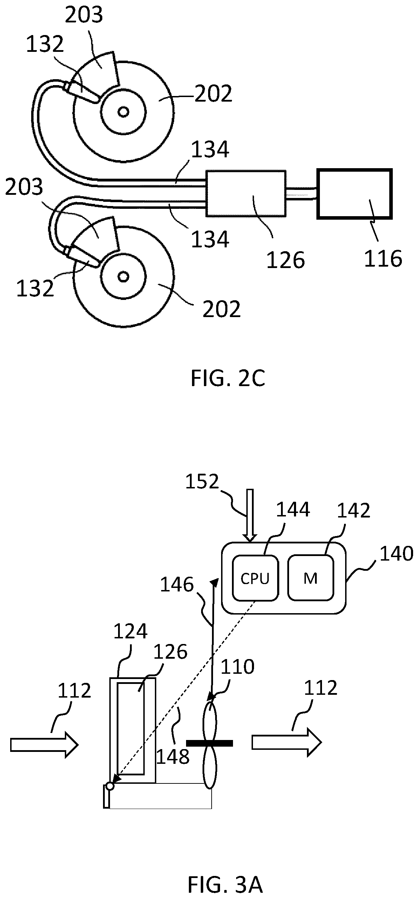

In yet another alternative arrangement shown in FIG. 2C, with respect to the airflow direction, the suction device 110 may be positioned downstream of the filter unit 126. Such an arrangement may advantageously minimize the suction device 110 from contacting the brake dust particles.

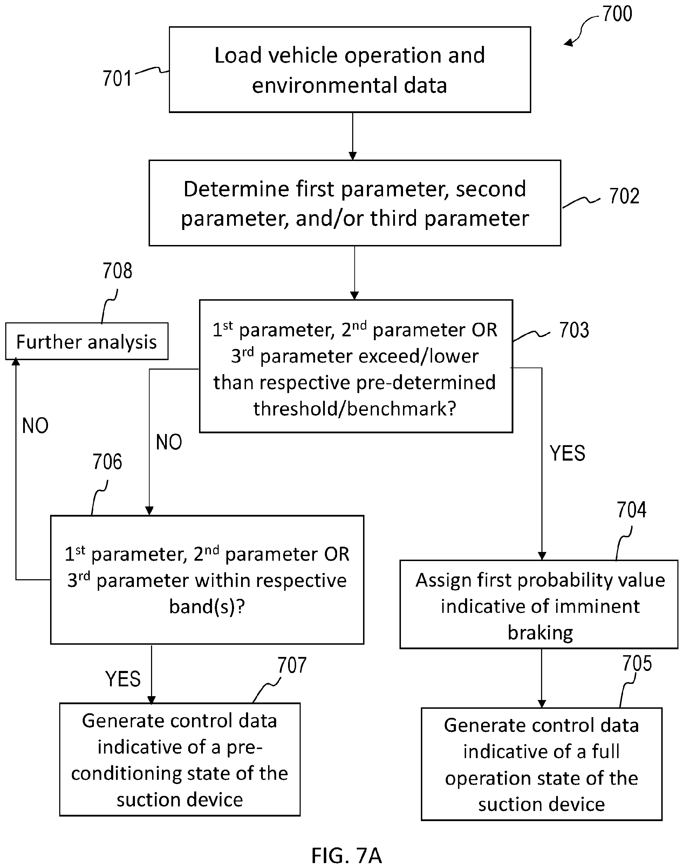

FIG. 3A shows a schematic illustration of an embodiment of the controller 140 comprising a central processing unit (CPU) 144 and a motor driver 142. The CPU 144 may be the processor 150 or a separate CPU or microcontroller (µC) configured to receive the control data 152 from a remote processor 150. The control data may be a digital or analog signal sent to the motor driver 142 to operate the suction device 110 based on the brake-related data 162. In some embodiments, the control data 152 may be an enable suction device signal indicative of an enable suction device state of the suction device 110, or a disable suction device signal indicative of a disable suction device state of the suction device 110. In some embodiments, the enable suction device state may further include one or more operation states to form an operation profile, such as one or more operation states which may be further elaborated with reference to FIG. 7A.

In various embodiments, the CPU 144 and motor driver 142 may be implemented as a single electronic circuit board or unit. In various embodiments, the CPU 144 may be implemented as a separate electronic circuit board or unit.

In various embodiments, the control data 152 generated by the processor 150 may be digital, such as binary data. For example, the control data 152 may be an enable suction device data, which may be a binary '1' data, and a disable suction device signal may be a binary '0' data. Alternatively, the enable suction device signal may be a binary '0' data, and the disable suction device signal may be a binary '1' data. In various embodiments, the control data may further include a pre-conditioning data indicative of a pre-conditioning state of the suction device 110. In various embodiments, the additional operation states associated with the enable suction device may be other than binary, for example, trinary, or it may be a range (e.g., encoded in 16 bits, 32 bits, 64 bits, etc.). In various embodiments, the probability of braking calculation may be based on such data, for example, in a simple case, the probability calculation may include a transfer function (in one example from trinary to binary: [0;0.5;1] -> [0;1 ;1], the trinary symbols could be implemented in other forms and computer data types, and notation could be binary in various number of bits, such as [00,01,10]). In another example, the probability of braking may be more than binary, e.g., at least trinary, whereas at 0 the blower remains unchanged (e.g., in idle, or zero), and at 0.5, the blower enters in pre-conditioning mode, and at 1 the blower goes into full braking frequency.

In some embodiments, the control data may be analog signals. In an alternative embodiment, the signal may comprise a string of characters.

In various embodiments, the suction device 110 may be operated by means of a motor and the controller 140 may be a motor controller. The control data indicative of the disable suction device operation state may be converted to a drive signal 146 by the controller to switch the suction device 110 off. The control data 152 indicative of the enable suction device operation state may be converted to a drive signal 146 by the controller to drive a motor of the suction device 110. The drive signal 146 may be used to control the operational intensity of the suction device.

In various embodiments, the suction device 110 may be a blower fan operated by the controller 140, the suction device 110 configured as a vacuum pump. The operational intensity may be proportional to a rotational frequency of the motor. In various embodiments, the fan may comprise at least three blades.

In various embodiments, the motor controller 140 may control the rotational frequency of the motor from a first pre-determined rotational frequency to a second pre-determined rotational frequency. In various embodiments, the blower fan frequency may be controlled from the first pre-determined rotational frequency of, for example, 5000 revolutions-per-minute (rpm) to the second pre-determined frequency of, for example, 50000 rpm. Controlling the blower fan may be such that, during suction, airflow is maximized while maintaining the blower temperature at an operating temperature or a range of temperature. In various embodiments, the motor controller 140 may comprise one or more temperature sensors to monitor the temperature of the blower fan.

In various embodiments, the motor controller 140 may provide a drive signal 146 to a motor driver 142, which may in turn convert the drive signal 146 to drive the motor. In one embodiment, the drive signal 146 may be an electrical signal. The driver circuit may amplify the electrical signal to a suitable electrical value to drive the motor. The electrical signal may be, in non-limiting examples, current, voltage and/or power.

In various embodiments, the electrical power source driving the vehicle may be a battery. The battery may be a battery for operating other components of the vehicle, such as, but not limited to, an electronic control unit or engine control unit (ECU). In various embodiments, the driver circuit may be integrated with the ECU.

FIG. 3A may include one or more shutters 124 capable of being opened or closed to expose the filter unit 126 to the external environment or shield the filter unit 126 from the external environment. In various embodiments, as an alternative or in addition to sending a drive signal 146 upon detection of a control data indicative of the disable suction device operation state to switch the suction device off, a bypass signal 148 may be sent by the CPU 144 to the one or more shutters 124 to operate the one or more shutters 124 to close, thereby shielding the filter unit 126.

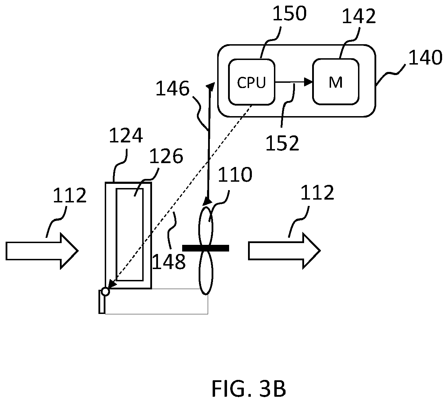

FIG. 3B shows another embodiment of the controller 140, wherein the processor 150 forms part of the controller 140 and the generated control data 152 is sent to the motor driver 142.

In the embodiment of FIG. 3A, it is appreciable that the processor 150 may be a remote processor. In various embodiments, the remote processor 150 may be a cloud server.

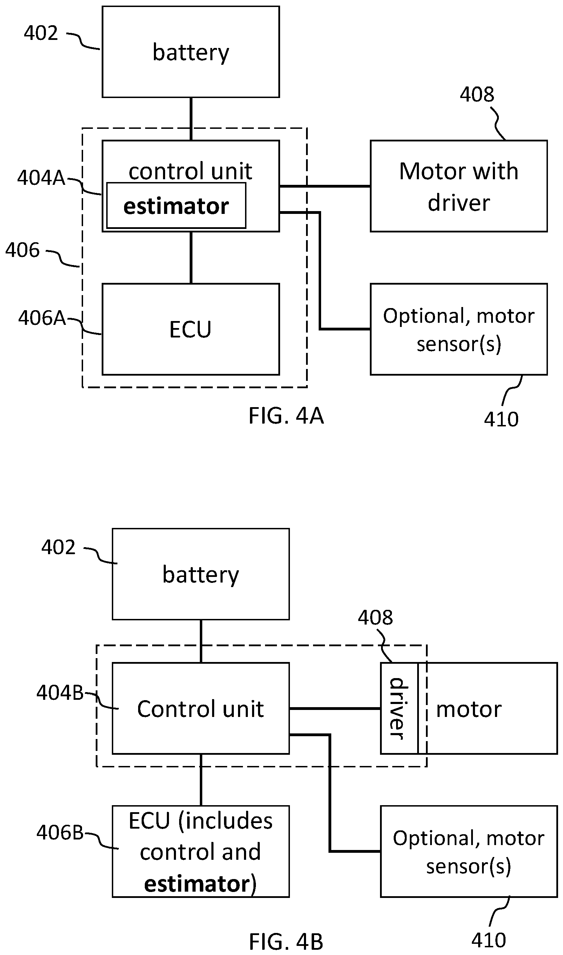

FIGS. 4A and 4B show two possible configurations of the controller 140 in a vehicle. Electrical power to the controller 140 may be supplied by an electrical power source, such as a battery 402, of the vehicle. The battery 402 may be a battery configured to provide power to an ECU 406 of the vehicle, and/or to other parts of the vehicle, for example, where the vehicle is an electric vehicle or hybrid vehicle, the battery 402 may also be configured to provide electrical power to the drive train of the electric or hybrid vehicle.

In the embodiment shown in FIG. 4A, the controller 140 may be in the form of a control unit 404A. The control unit 404A may be an electrical/electronic circuit having one or more electrical/electronic components. The control circuit 404A may include the estimator module 151. In some embodiments, the control unit 404A and the ECU 406A may be integrated as one single unit.

Alternatively, in the embodiment shown in FIG. 4B, a control circuit 404B may be a separate circuit that is operably connectable to an ECU 406B. In the alternative arrangement shown in FIG. 4B, the control circuit 404B may be a separate circuit, the separate circuit operably connectable with the ECU 406B. The ECU 406B may include the estimator module 151.

Each of the depicted control circuit 404A, 404B may be connected to a vehicle motor driver 408 of the suction device 110. The vehicle motor driver 408 may be configured to drive a motor of the vehicle to power the operation of the vehicle. In some embodiments, the vehicle motor driver 408 may also power the operation of the suction device 110, i.e. including the function of the motor driver 142.

In some embodiments as shown in FIG. 4B, the motor driver 408 may be integrated with the control unit 404B. The motor driver may be on the power side of the electrical circuit that controls the electrical part of the motor (e.g. the windings).

In some embodiments, the control units 404A, 404B may be operably connected to one or more motor sensors 410, each of the one or more motor sensors 410 be configured to receive motor sensor data 410 from the motor. Such motor sensor data 410 may include at least one of a motor temperature data, revolutions-per-minute (RPM) data, and speed/velocity data of the vehicle.

The control circuits 404A, 404B may be connected to the one or more sensors 160 to obtain brake-related data 162. The brake-related data may include at least one of a pre-braking data, a braking initialization data, and a braking operation data.

In some embodiments, the estimator module 151 may run on ECU, the control unit or another onboard processing unit (not shown).

In some embodiments, computer memory may be distributed in one or more of the abovementioned components. Operably connectable may include the meaning of connectable via a vehicle's data communication bus, for example, a controller area network (CAN) bus.

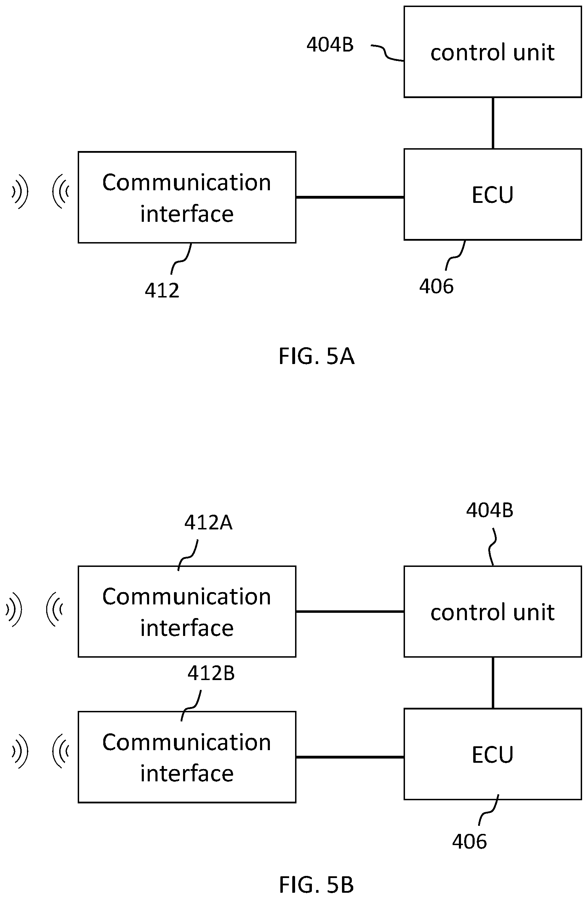

FIG. 5A and FIG. 5B show two configurations and arrangement of a communication interface. In some embodiments, the vehicle may have a central communication interface. In FIG. 5A, the ECU 406 is connected to an associated (or integral) communication interface. In FIG. 5B, the control unit 404B and the ECU 406 are each connected to a separate communication interface 412A and 412B respectively. The communication interface may include a pre-defined wireless communication protocol to receive the brake-related data 162 in the form of sensor data. Non-limiting examples of the pre-defined wireless communication protocols include: global system for mobile communication (GSM), enhanced data GSM environment (EDGE), wideband code division multiple access (WCDMA), code division multiple access (CDMA), time division multiple access (TDMA), wireless fidelity (Wi-Fi), voice over Internet protocol (VoIP), worldwide interoperability for microwave access (Wi-MAX), Wi-Fi direct (WFD), an ultra-wideband (UWB), infrared data association (IrDA), Bluetooth, ZigBee, SigFox, LPWan, LoRaWan, GPRS, 3G, 4G, LTE, and 5G communication systems. In addition, or alternatively, the processor 150 may receive or obtain the brake-related data 162 via wired means. In some embodiments, the communication interface of FIG. 5A and/or Fig. 5B may be configured to exchange information with one or more other vehicles, i.e. vehicle-to-vehicle communication, such as direct vehicle-to-vehicle data connection. The vehicle-to-vehicle communication may enable the vehicle to wirelessly exchange data about the speed, locations, and direction of travel with other vehicles.

In some embodiments, the one or more sensors 160 may include one or more location sensors, one or more pressure sensors, one or more temperature sensors, one or more moisture/water sensors, one or more distance sensors, one or more particulate matter sensors, and/or one or more image sensors, for example, cameras. In some embodiments, the one or more sensors 160 may further include one or more modules to derive or calculate one or more parameters based on raw signals received by the one or more sensors 160. As an example of a distance sensor, a light detection and ranging (LiDAR) sensor may be used to emit laser light from a transmitter source and receive a reflected light from one or more objects the laser light is incident on. The reflected light is then detected by a receiver of the LiDAR sensor, and the reflected light signal, including a time of flight (TOF) parameter may then be used by the one or more modules within the LiDAR sensor to develop a distance map of the one or more objects.

As another example, a camera may be used to capture image data which may be further analyzed by an image processing module to determine the driving mode of the vehicle, whether the vehicle is in an express way driving mode, an urban driving mode, or a congestion driving mode.

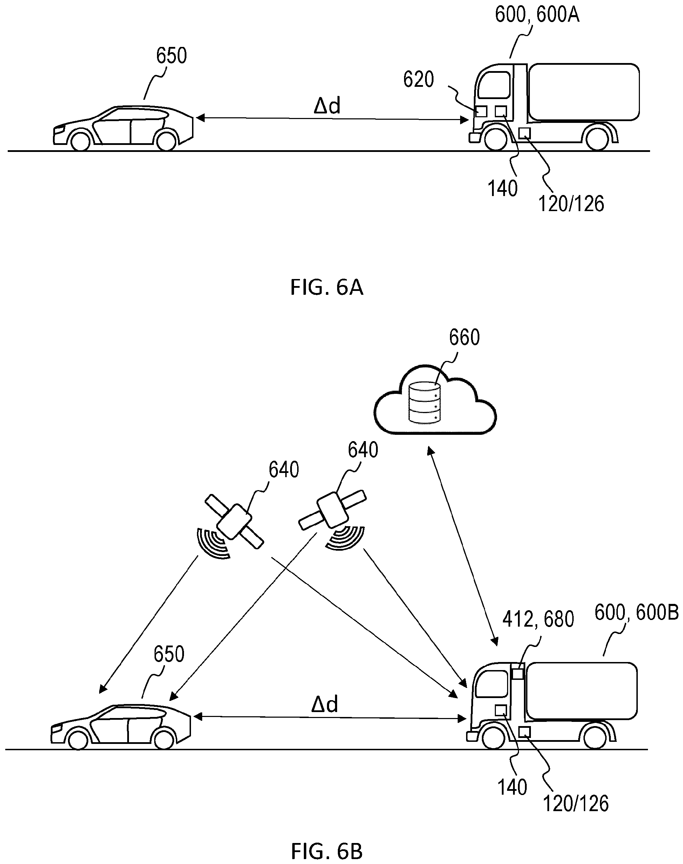

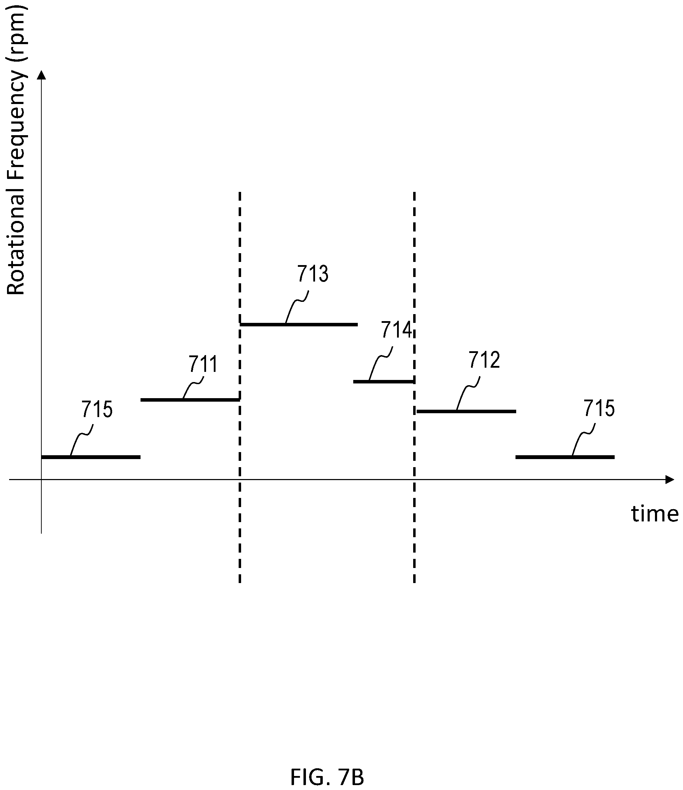

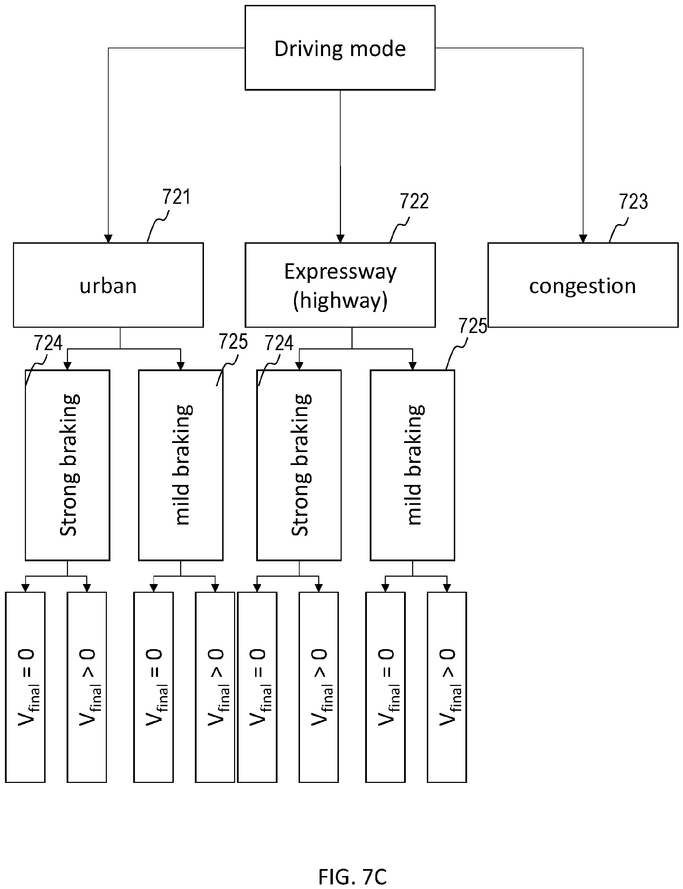

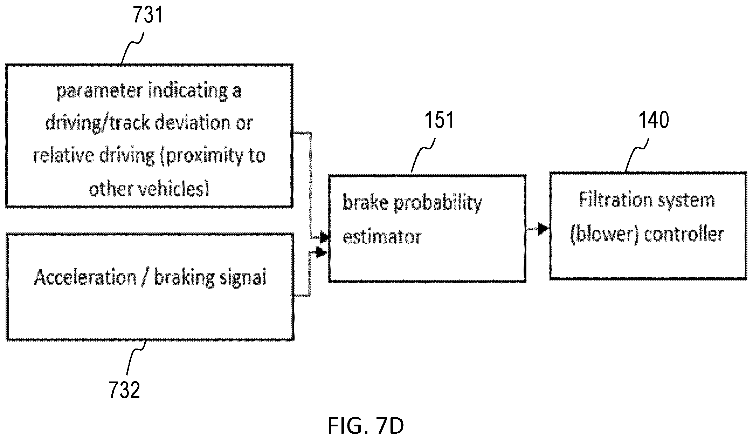

Embodiments of the obtained operation data used to determine the prognosis of braking events and select the control strategies to operate the suction device 110, which in turn operates the filter system 100, are described with reference to FIG. 6A, 6B and FIG. 7.

FIG. 6A shows a vehicle 600A comprising controller 140 configured to receive sensor data (operating data) from the one or more sensors 160 in the form of onboard sensors 620. The onboard sensors 620 may be used to determine or obtain, *inter alia,* a distance Δd between the vehicle 600A and another vehicle 650. The onboard sensors 620 may further comprise other sensors such as temperature sensors, humidity sensors, pressure sensors etc. to detect environmental data such as weather conditions and obtain weather data. The onboard sensors 620 may further include image sensors (e.g. cameras) to capture images surrounding the vehicle so as to provide an indication of the traffic conditions around the vehicle.

FIG. 6B shows another vehicle 600B comprising the controller 140 configured to receive, remotely, location data from location sensor(s) of the one or more sensors 160. The one or more sensors 160 may be in the form of a navigation system such as a global positioning system (GPS) system, the GPS system comprising a plurality of satellites 640 (usually 4) and a receiver 680 (within the vehicle 600B). The receiver 680 may be part of the communication interface 412. The communication interface 412 may be arranged to remotely receive location data from the satellite 640 and historical or map data from the cloud server 660. The location data obtained from the location sensor(s) so as to determine the location of the vehicle 600B. The location data of the other vehicle 650 may also be obtained and may be transmitted to the vehicle 600B (subject to privacy constraints).

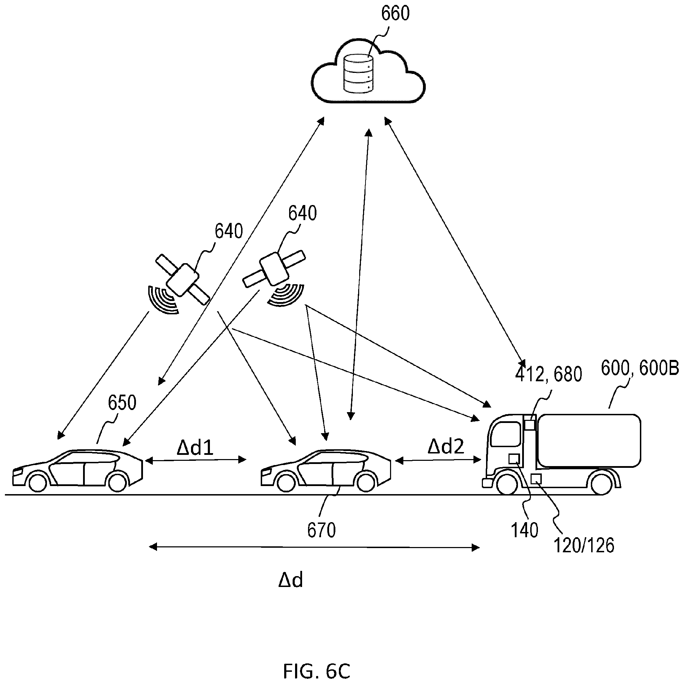

FIG. 6C shows another embodiment of the vehicle 600B in a convoy arrangement, with another vehicle 670 positioned between vehicle 600B and vehicle 650. Similar to FIG. 6B, the controller 140 may be configured to receive, remotely, location data from location sensor(s) of the one or more sensors 160. The communication interface 412 may be configured to remotely receive location data from the satellite 640 and historical or map data from the cloud server 660. In addition, the communication interface 412 may be configured to receive vehicle data from vehicle 670 via direct vehicle-to-vehicle connection or communication. The location data obtained from the location sensor(s), in addition to the data received from vehicle 670, may be used to obtain/determine a distance Δd2 between the vehicle 600B and vehicle 670, a distance Δd1 between the vehicle 650 and vehicle 670. The obtained distance parameters Δd2 and Δd1 may be used to derive the distance Δd parameter, i.e. the distance between the vehicle 600B and vehicle 650.

It is contemplated that the embodiments of FIGS. 6A, 6B, and 6C may be combined, that is, the vehicle 600A and 600B may be the same vehicle 600 comprising onboard sensors 620 and comprising communication interface 412 to receive sensor data from remote sources. Particularly, the onboard sensors 620 may be configured to receive braking data of the vehicle 600 over a period of time. The braking data may include the number of activations and releases of a braking lever of the vehicle, and the braking torque associated with the activations (i.e. translatable to mild braking or hard braking events).

In some embodiments, the embodiments of FIGS. 6A, 6B, and 6C, particularly the one or more sensors 160, may include one or more particulate matter sensors, and one or more tire pressure sensors, may be used to determine if the vehicle 600 is operating in various driving modes, such as an urban road driving mode, a highway or express way driving mode, a congestion driving mode, an off-road driving mode, a race-driving mode, etc.

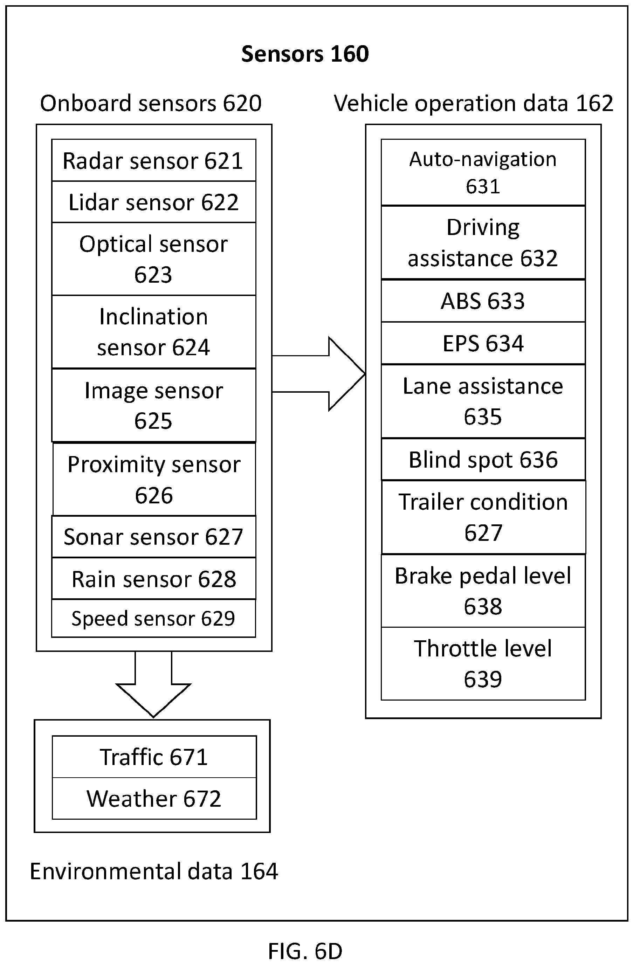

FIG. 6D shows various possible examples of the at least one sensor 160 and on-board sensor 620 used to obtain, derive, compute or calculate different vehicle operation data 162 and environmental data 164.

In some embodiments, the onboard sensor 620 comprises one or more of the following: a radar sensor 621, a light detection and ranging (lidar) sensor 622, an optical sensor 623, an inclination sensor 624, an image sensor 625, a proximity sensor 626, and a sonar sensor 627, a moisture/rain sensor 628, and a speed sensor 629.

In some embodiments, the at least one onboard sensor 620, for example a moisture/rain sensor 628, may be used to obtain or derive a traffic data, a weather data, or a combination thereof.

The at least one onboard sensor 620 may be configured to obtain or derive at least one of the following vehicle operation data 162: an auto-navigation data 631, a driving assistance data 632, an anti-lock braking system (ABS) data 633, an electric power steering (EPS) data 634, a lane assistant data 635, a blind spot data 636, a trailer condition data 637, a brake pedal level data 638, and a throttle level data 639.

The at least one onboard sensor 620 may also be configured to obtain or derive at least one of the following environmental data 164: a traffic information 671 surrounding the vehicle 600, and weather information 672 around the vehicle 600.

FIG. 7A shows a flow chart of a method 700 for estimating or determining the probability of the vehicle braking based on the vehicle operation data 162 and environmental data 164.

In 701, the vehicle operation data 162 and the environmental data 164 are loaded to the processor 150 or any other module(s) for executing the method 700.

In 702, a few parameters may be determined based on the data 162, 164. For example, a first parameter may be determined, the first parameter indicative of whether the vehicle has deviated from an intended travel path, i.e. lane deviation; a second parameter indicative of whether the vehicle is in proximity with one or more objects, for example another vehicle in front of the vehicle 600, and/or a third parameter indicative of the vehicle speed or velocity. The third parameter may be used to derive further parameters such as acceleration or deceleration, i.e. rate of change of speed or velocity.

In 703, each of the first parameter, the second parameter and the third parameter are compared with their respective pre-determined benchmarks or threshold. Upon a positive determination that the first parameter, the second parameter, or the third parameter exceeds or is lower than the respective threshold(s) or benchmarks, the prognosis of the braking event is determined to be high, and a probability value is assigned. In some embodiments, upon a positive determination, based on the first parameter, that the vehicle has exceeded a pre-determined deviation value (for example, more than 15 degrees deviation with respect to an intended travel direction); or upon a positive determination, based on the second parameter, that the vehicle is less than a pre-determined safety distance with respect to one or more objects (for example, less than 50 meters), or the positive determination, based on the third parameter, that the vehicle is more than a pre-determined rate of deceleration (negative acceleration), the prognosis of a braking event is determined to be a first probability of the braking event.

In 704, a first probability value is assigned based on an indication that a braking event is imminent. In some embodiments, the first probability value may be in a range of 0.8 to 1, 0.8 or more. In some embodiments, the first probability value may be 0.9 or more.

In 705, a control data 152 indicative of a full operation state of the suction device 110 is generated.

In 706, in a negative determination of 703, then the first parameter, second parameter and the third parameter are checked to determine if they fall within a band (range). This may be for example a range of 10 to 15 degrees deviation in relation to the first parameter, a range of 10 meters to 200 meters in relation to the second parameter, and a range of -14meters/second² (m/s²) to -4 m/s².

In 707, in a positive determination that any of the first parameter, the second parameter, or the third parameter are within the respective ranges, a second probability value indicative of an upcoming braking event may be assigned. This may correspond with the generation of a control data indicative of a pre-conditioning state of the suction device 110 is generated.

In 708, in a negative determination of 705, then a further analysis may be carried out to determine the operation state of the suction device 110.

FIG. 7B illustrates the various operation states of the suction device 110 using a graph of rotational frequency (in revolutions per minute) of a motor of the suction device 110 vs. time. The graph may be used to illustrate a pre-conditioning state 711, an idle state 712, a full operation state 713, a post-conditioning state 714, and a rest state 715. Each of the aforementioned operation states may operate for a specific duration.

The pre-conditioning state 711 may include a pre-conditioning of the suction device 110 to prepare the suction device 110 for filtering brake dust particles generated by the one or more braking devices 200 during braking events. In some embodiments, the pre-conditioning state may be associated with the motor of the suction device 110 being switched on in anticipation of a full operation suction power corresponding to different braking events.

In some embodiments, the pre-conditioning state may correspond to an increasing blower frequency from a rest frequency (e.g., from zero, or 5000 rpm) to an intermediate frequency, the intermediate frequency may be chosen between one-fifth and a half of a pre-determined maximum frequency. For example, the intermediate frequency may be chosen between 15000 rpm and 40000 rpm, or from 15000 rpm to 40000 rpm, where there is either a pre-determined probability of a future braking event occurring within a pre-determined time period, and/or a braking event initialization has been detected via, for example, movement of a braking pedal. In certain conditions, for example, if the vehicle is on an expressway and a braking event happens relatively quickly, the pre-conditioning state may switch to a full operation state 703 quickly, due to a relatively high probability of a serious braking event.

In some embodiments, the pre-conditioning state 711 may be determined based on a plurality of the likelihood of one or more changes indicating that a relatively high likelihood of braking event(s) may be happening. For example, a forecast traffic jam based on a map information service, a sudden decrease of vehicle speed or velocity, etc.

In some embodiments, the pre-conditioning state 711 may correspond to the brake probability estimator returning a positive signal indicating the vehicle will enter into a braking state/event within a pre-determined period.

The idle state 712 corresponds to a state where the suction device 110 operates at an idle intensity, i.e. at a revolution per minute (rpm) greater than zero, in anticipation to increase the rpm to the full operation state 713 in case of a brake event. The idle intensity (in rpm) may vary, for example, according to different driving modes and/or traffic conditions. In some embodiments, the idle state 712 may correspond with a resting or cooling state of the motor of the suction device 110 between successive braking events. In some embodiments, the idle state 712 may correspond to a state of cooling or a "default state" between successive braking events.

The full operation state 713 may be associated with a nominal full operation intensity of blower, i.e. a pre-determined rpm (or delivered power) that is used in blower control during an active filtration associated with a brake event. The nominal full operation intensity of blower may be set differently for different control strategies of the filtration system. In some embodiments, the full operation state 713 may be ended with a detection of a "brake release" signal from the vehicle brake controller.

The post-conditioning state 714 corresponds with a blower frequency (in rpm) at a level higher than the idle state 712 or higher than zero (depending on the embodiment), for a pre-determined post-conditioning time, after a braking event associated with the full operation state 713 has ended. The post-conditioning state 714 may allow for faster response time if another braking event occurs within a pre-determined post-conditioning time. This may also allow for cooling of the blower due to a decreased blower frequency relative to the full operation state 713. In some embodiments, the post-conditioning state 714 is after a brake dust filtering time window, where the generated airflow 112 can be used to cool the blower, and off-brake emissions can be reduced. Off-brake emissions may correspond with emissions coming from a brake system when the frictional brake disc is accelerated and the particles are sucked by an underpressure of the rotating system.

The rest state 715 may correspond to a state when the suction device 110 is started up and is comparatively lower in rpm compared to other states. In some embodiments, the rest state 715 may correspond to a zero rpm.

In some embodiments, some states may be merged. For example, the idle state and the post-conditioning state and/or the pre-conditioning state may be merged.

It is appreciable that although the FIG. 7B depicts abrupt changes in rpm between the different states, the actual changes in rpm between states may be in accordance with a slope based on a pre-determined change in rpm over time as the motor and blower require time to respond to a control data to decrease or increase the rpm. It is contemplated the full operation state 713 may extend until after a braking lever starts to be released by a driver of the vehicle 600, or it may end and merge into the post-processing state 714 when the brake starts to being released.

Although FIG. 7B depicts the different operation states to be at a relatively constant rpm, it is appreciable the rpm of the suction device may, in real life, fluctuate within a state and in some embodiments, may be adaptative depending on changes of the control data.

With reference to FIG. 7C, there may comprise different driving modes depending on the driving modes of the vehicle 600. Driving mode means the mode that vehicle is driving, and the mode may depend and be estimated based on the traffic conditions. Non-limiting examples include urban 721, express way 722, and congestion 723.

The traffic conditions may in turn be determined or classified based on the speed/velocity of the vehicle, frequency of braking, and/or images captured from the surrounding environment of the vehicle 600. Each of the aforementioned driving modes may further comprise different braking events of the vehicle 600. These events may include a strong braking event 724, wherein the velocity of the vehicle may come to a complete stop after the one or more brakes are applied - final velocity V_{final} of the vehicle is zero, or a mild braking event 725 wherein the vehicle 600 slows down after the one or more brakes are applied but does not come to a complete stop- final velocity V_{final} of the vehicle is greater than zero.

It is appreciable for a mild braking event 725, the nominal full operation intensity (see FIG. 7B) of the suction device 110 may be lower than for strong braking event 724. The operation intensity of the blower of the suction device 110 may vary for different filtration system operating modes, for example, for mild braking the nominal full operation intensity may be lower than for strong braking. In some embodiments, strong braking may have a higher pre-determined torque and/or higher pre-determined torque gradient than the mild braking.

In some embodiments, the estimator module 151 may be configured to estimate the probability of a braking event occurring within a pre-determined time (e.g., in the next 10 seconds). The generated control data in response to the braking event may be implemented at a multi-level, for example, within 1 minute (min), maintain in an idle operation state, within 10 seconds (secs), set to a pre-conditioning operation state.

In some embodiments, the estimator module 151 may estimate a time parameter for the occurrence of a next braking event. The occurrence of a next braking event may include a corresponding probability (P) of occurrence, for example, a dataset comprising probability and time (t) may be obtained as follows [[P=1,t=10], [P=1, t=9] [P=0.5, t= 8], [P=0, t=7], [P=0, t=6], [P=0, t=5]...[P=0,t=1]]. Based on the obtained dataset, the estimator can then set a threshold, e.g., at t=6, is P>P_th).

FIG. 7D shows one particular embodiment of the brake probability estimator module 151 for receiving input dataset in the form of first operation data 731 indicative of a driving/track deviation or relative driving with respect to another vehicle (for example a distance with respect to another vehicle 650), and second operation data 732 indicative of an acceleration/deceleration or braking signal. The brake probability estimator module 151 is configured to receive the first operation data 731 and the second operation data 732 to generate the control data 152 indicative of an operation state of the suction device 110. The control data 152 may then be sent to the controller 140, which in turn is used to provide drive signals to drive a motor of the suction device 110.

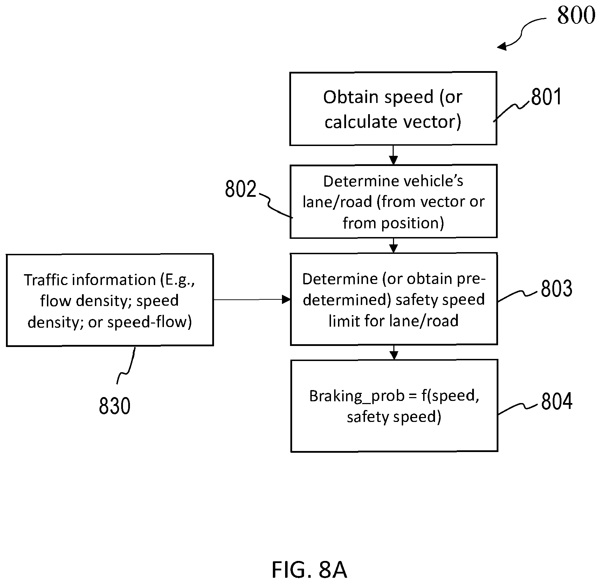

FIG. 8A is an exemplary flow chart of a method 800 for estimating a probability of braking within a pre-determined time.

In 801, the speed of the vehicle is obtained. The speed may be used to derive related parameters such as velocity (based on vector calculation), acceleration or deceleration.

In 802, the vehicle intended travel direction (which may include a lane or a road) is determined based on vector calculation and/or location data.

In 803, the safety speed limit for the lane/road may be obtained or determined. This may be obtained using remote traffic information database. The speed obtained in 801 may be used to determine traffic information such as flow density, speed density, and/or speed-flow. The speed obtained in 801 may also be used to calculate an acceleration/deceleration of the vehicle 600.

In 804, the probability of a braking event P_{brake} occurring may be calculated based on a function of the speed and the safety speed limit., i.e. P_{brake} = f(speed, safety speed limit). In some embodiments, if the speed determined in 821 is higher than the safety speed limit, the probability will be assigned to 1 or near 1, indicating a very likely probability of braking. It is appreciable that P_{brake} may include other variables such as distance with another vehicle, i.e. see distance Δd between vehicle 600A/600B and vehicle 650 in FIGS. 6A, 6B, and 6C. If the distance Δd is less than a distance threshold, the probability of braking is assigned to 1 or near 1.

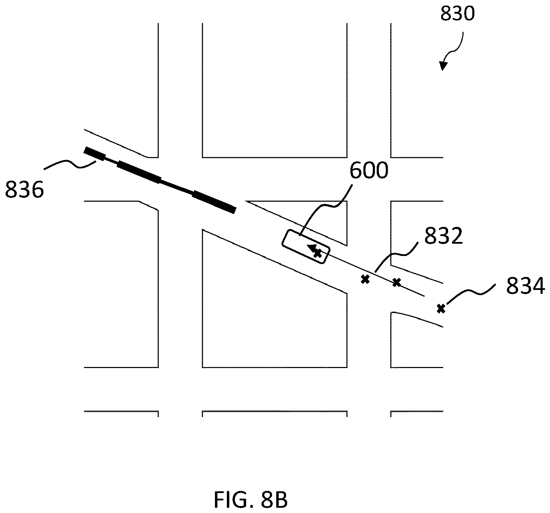

FIG. 8B is an illustration of a vehicle operation data, in the form of a traffic information 830, used in the various embodiments for determining a probability of braking. The traffic information may be obtained from map data. In the illustration, the vehicle 600 may be travelling on an intended direction/path defined by a road, with the vector 832 determined (using interpolation and/or extrapolation) based on GPS data points 834 obtained over a number of positions or over a pre-determined time period of the moving vehicle 600. The traffic flow information 836 may be indicative of objects and/or other vehicles 650 along the same intended direction defined by the vector 832, and may provide information such as flow density, speed density, and/or speed flow. Traffic flow information 836 indicating congestion may mean a high likelihood of braking, i.e. P_{brake} assigned to 1 or near 1.

In some embodiments, the traffic information 830 may include the extent of deviation of the vehicle 600 from the intended direction/path as defined by the vector 832 of travel once the intended direction/path 832 has been established based on, for example, the road the vehicle is traveling on, and the vehicle travel direction. The extent of deviation may be expressed in the form of a deviation angle with respect to the intended direction/path as defined by the vector 832. In some embodiments, the deviation angle may be compared with a pre-determined deviation threshold to determine if the vehicle 600 has deviated from the path of travel. Upon a positive determination that the vehicle 600 exceeded the pre-determined threshold, the brake probability estimator module 151 may generate a control data indicative of an imminent braking event of the vehicle, and accordingly, a full operation state of the suction device 110 may be determined (see 705).

In some embodiments, the distance Δd between the vehicles (see FIGS. 6A, 6B and 6C, for example), also referred as distance to vehicle in front (or inter-vehicle distance) may be used for estimating the probability of a braking event. For example, the distance may be compared against a stopping distance, which may depend on the vehicle speed, and may further depend on other factors, such as road surface/pavement conditions (e.g., distance may increase when there are adverse weather conditions such as rain, snow or ice due to reduction in friction on the road).

In some embodiments, a parameter referred to as a matching braking distance may be used for estimating the probability of the braking event. The matching braking distance refers to a distance necessary for a vehicle to, at full braking, reduce the speed until the speed is substantially identical to the vehicle in front, added to the stopping distance. As an example, if the matching braking distance, or optionally the matching braking distance added to a pre-determined tolerance value, is higher than a current inter-vehicle distance, then there the probability of braking is high, e.g., indication that braking is highly likely, for example, set to 1 or near to 1, in a normalized 0 to 1 range. In an exemplary scenario, a vehicle on a highway having a relatively higher speed may approach another vehicle on the highway having a relatively lower speed, and such a scenario may indicate that braking is needed and hence the probability of braking is high. If a distance allows, the braking may not result in the vehicle of relatively higher speed to come to a stop but to a matching speed of the vehicle with the relatively lower speed.

In some embodiments, a distance warning sensor data, such as a collision warning sensor, which may include one, or a combination of, the above listed sensors, may be configured to provide warning data in the form of an alert (ON or OFF), wherein when it is ON then the probability of braking may be higher, e.g., maximized (e.g., set to 1 or near 1, in a normalized 0 to 1 range). As an alternative to a binary on/off, the warning data may be expressed in other form, for example trinary, such as, no warning, warning, collision imminent, or it may be a range (e.g., encoded in 8 or 16 bits). The probability of braking calculation could be based on such data, e.g., in a simple case, it could be a transfer function (in one example from trinary to binary: [0;0.5;1] mapped to/associated with [0;1;1]. The trinary symbols can be implemented in other forms and computer data types, and notation could be binary, such as [00,01,10]. In another example, the probability of braking may be more than binary, e.g., at least trinary, whereas at 0 the blower remains unchanged (e.g., in idle, or zero), and at above 0.5, the blower enters in pre-conditioning mode, and at above 0.9 to 1 (or at 1) the blower goes into full braking frequency.

A location/position of the vehicle may be matched against a navigation map data. For example, the position of the vehicles in coordinates form may be obtained from a GPS system, and the navigation map data may be obtained remotely as an "overlay". The navigation map data may contain static and/or dynamic information on safety speed limits. The vehicle's speed and derived vector (i.e. velocity) may then be compared to the information on speed limits for said position. When the vehicle's speed is above safety speed limit, then the risk of braking may increase, the risk of braking may be a function (e.g., linear, quadratic, or a fitting on experimental data) of the excess speed. The navigation map data may have static speed information that is historically associated with the specific road and position, such data may include further dimensions, such as, time of the day. In some examples, the static data may be updated regularly, e.g., once a day, once a week, once a month, or once a year. The navigation map data may have dynamic speed information which is adapted to the current pavement, traffic conditions, road work. For example, if the traffic density ahead is high, then the safety speed limit may be recalculated and reduced. The aforementioned derivation of speed limit and update of navigation map may be associated with the calculation or re-calculation of safety speed limit on a vehicle's intended path of travel in 803 and 804.

The probability estimate may be used to determine the operation state of the suction device 110. For example, when the processor 150 receives vehicle operation data 162 and/or environmental data 164 related to a distance with respect to another vehicle in front of the vehicle, and the distance is less than a first pre-determined distance threshold, the operation state of the suction device 110 may be set to a pre-conditioning state or a full operation state.

In some embodiments, environmental data, such as weather data, may be obtained from a weather information provider or other weather data source, and may include data obtained from onboard sensors of the vehicle 600. In some embodiments, the weather data source may be a remote cloud server. The weather data may be indicative of rain, heavy rain, snow, volcanic ash, sandstorm, air temperature, air relative humidity, etc. of a particular region or location of the vehicle 600 is determined to be, based on the location sensor data. Alternatively, or in addition (for example, to augment data), onboard vehicle sensors (e.g. sensors 620) may include temperature, humidity, pressure sensors etc. to detect weather conditions and obtain weather data. For example, onboard temperature sensors of the vehicle can be used to obtain air temperature outside the vehicle 600. Such data may be read via the vehicle data communication bus, for example, a controller area network (CAN) bus, of most vehicles. Air relative humidity data of the air outside the vehicle can also be obtained from the onboard sensors, for example, in a similar manner as outside air temperature. In another example, one or more image sensors, such as cameras or video cameras, may be used to obtain image data via continuous streaming or at a pre-determined interval. The various sensor data could be analyzed by a classifier module to determine the type of adverse weather for the classification of images around the vehicle's surroundings, wherein the image classifier module may be an artificial intelligence (Al) based classifier module, such as a machine learning based classifier module and may be trained with a training data set of labelled images of one or more of rain, heavy rain, snow, volcanic ash, sandstorm, and other weather events. The Al or machine learning may be trained based on supervised learning, un-supervised learning, or a hybrid of the aforementioned.

In some embodiments, a rain event can be detected by water or moisture sensors arranged on an exterior area/ region of the vehicle. The classification of a rain event as adverse weather may be based on the intensity of rain, i.e. a heavy rain event may be indicative of adverse weather. In some embodiments, the heavy rain event may be based on further information obtained from remote weather data source, for example when the precipitation rate is more than a pre-determined rate, for example more than 7.6 millimeters (mm) per hour. The information relating to the pre-determined rate may be obtained from the weather data source as described above.

In some embodiments, as an alternative or in addition to the real-time determination of various concentration in the environment of the vehicle, the processor 150 may be configured to receive average and/or historical pollution data.

In some embodiments, historical data may be obtained from an external database (not shown), for example a pollution data information service which may also be integrated or form part of the weather database.

In some embodiments, the particulate matter concentration, such as selected from as one or more of: PM10, PM5, PM2.5, PM1 may be obtained from respective particulate matter sensor(s) arranged such as to measure exterior air (exterior to the vehicle), for example from a fresh air intake of any of the vehicle's air handling systems, such as from a cabin air filtration system.

In some embodiments, a pre-determined threshold of a high coarse dust concentration may be set, in an example, as PM10 concentration equal or above 1000 microgram per meter cube (mg/m³).

In the various embodiments, the onboard sensors of the vehicle may include, for example, radar, optical (lidar, laser range, LED range, imaging sensors, such as cameras), sonar, acceleration sensor, and inclination sensor. One non-limiting example of the inclination sensor may be a multidimensional acceleration sensor that can measure acceleration in several directions from which the inclination may be determined. The data from any of such sensors may be obtained, in examples, via a vehicle's communication bus, e.g. a CAN bus connected to the sensors or from the ECU or other controller that is operably coupled to the sensor. Some of these sensors may be grouped.

In some embodiments, the one or more sensors 160 may include one or more inclination sensors configured to receive inclination data (e.g. pitch). The inclination data may be used to indicate that the vehicle 600 is driving on a down-slope. If the accelerator of the vehicle is detected not to be in use, then there is a likelihood that a braking event is happening or about to happen, for example, to maintain a relatively constant velocity. A further indicator may be that a vehicle gear may be engaged and the rounds-per-minute (RPM) of the engine is not increasing as would be expected for a measured inclination. The inclination data may be used as an input data to set the operation state of the suction device 110 to the various suction device states based on the likelihood of the braking event happening.

In some embodiments, the image sensor of the vehicle, such as a camera, may also be used to detect braking lights ahead of the vehicle in order to determine a likelihood of braking, and hence set the operation state of the suction device to a pre-conditioning state. The camera may also be used to detect various warning lights ahead of the vehicle. The camera (or a separate camera where there are multiple cameras) may also be used to detect road signage, such as traffic lights, or warning signs in accordance with various standards/manuals, such as rev. 3 ed 2009 Manual on Uniform Traffic Control Devices for Streets and Highways (MUTCD), USA, or part 2 of the VzKat or signs listed in annex 1 of the German StVO of 6 March 2013 BGBI. I S. 367, and/or other regulatory definitions from other jurisdictions. The image sensors may be used to capture images which may then be sent to an Al-based classification module for training and/or classification.

In some embodiments, data from various sensors of the onboard systems may also be used to augment one or more of the aforementioned sensor data. Examples of such systems may include an auto-navigation system, a driving assistance system, an anti-locking braking system (ABS), an electric power steering (EPS) system, a lane assistant system, a blind spot assistant system, a trailer condition system (where available), a brake pedal level system, acceleration pedal position. Data from one or more of the aforementioned sensors of the vehicle onboard systems may include the raw data from the sensors, and/or may further include raw data pre-processed into at least one of ABS/EPS system data, lane assistance data, blind spot data, trailer condition data, brake/acceleration pedal measurement/data.

In some embodiments, the vehicle 600 may comprise an onboard communication circuit or a camera used to receive see-through and/or traffic ahead of one or more other vehicles in front of the vehicle 600. For example, another vehicle within a pre-determined distance ahead of the vehicle 600 may be detected by the onboard communication circuit and camera. The raw data obtained, which may be in the form of images and/or reflected laser signals may be analyzed by an estimator module to compute a probability of imminent braking, and said probability may be compared against a threshold or be entered in the calculation of the estimation of a braking event to occur. The probability of the braking event may then be used to determine the operation state of the suction device 110, such as a pre-conditioning state or a full operation state if the probability of the braking event exceeds a threshold, thus indicating a likely or highly likely of the braking event.

In some embodiments, at least part of the data processing may be implemented in the controller 140, in one or more cloud servers, in an ECU, or in a combination thereof.

According to another aspect of the disclosure there is provided a vehicle 600 comprising one or more braking devices 200 and a filter system 100 positioned in a vicinity of the one or more braking devices 200, the filter system 100 comprises a suction device 110 to generate an airflow 112 in the vicinity of the one or more braking devices, an airflow channel 130 positioned to allow airflow 112 generated by the suction device 110 through a filter element 120; the filter element 120 positioned to filter brake dust particles generated by the one or more braking devices 200 within the airflow 112, the filter system 100 comprising at least one processor 150; and a memory having instructions stored therein, the instructions, when executed by the at least one processor 150, cause the at least one processor 150 to: obtain at least one of a vehicle operation data 162 and an environmental data 164 as inputs, and determine a prognosis of a braking event of the vehicle as output; wherein the processor 150 is configured to generate a control data 152, the control data 152 indicative of an operation state (e.g. pre-conditioning state 701, full operation state 704) of the suction device 110, the control data 152 being based on the prognosis of the braking event of the vehicle.

In some embodiments, the vehicle 600 may comprise onboard sensors 620, the onboard sensors 620 configured to obtain the vehicle operation data 162 and the environmental data 164. The data may be similar to that as illustrated or depicted in FIG. 6D.

In some embodiments, the environmental data may include glare data, for example for detecting when visibility is deteriorated due to light (such as from the Sun) shining on a driver or on sensors (such as camera) used for automated driving. In examples, the sensor may be a light intensity sensor, a camera recording a driver's face illumination, a camera watching the road in drive direction, or other sensors. The glare data may be used to estimate or improve estimations, of a probability of braking.

The vehicle 600 may be fully equipped or installed with all necessary sensors required to obtain the environmental data and the vehicle operation data. Alternatively, the vehicle may be equipped or installed with at least one sensor and obtain sensor data from one or more remote sensors. The remote sensor may include one or more map services, weather data services, and/or historical databases of traffic information, weather, or maps.

In some embodiments, the vehicle may be an electric car, a hybrid car, motorcycles, etc.

In some embodiments, the control data may be sent to the controller 140, the controller 140 configured to produce a drive signal for driving the suction device 110 or a motor associated with the suction device 110.

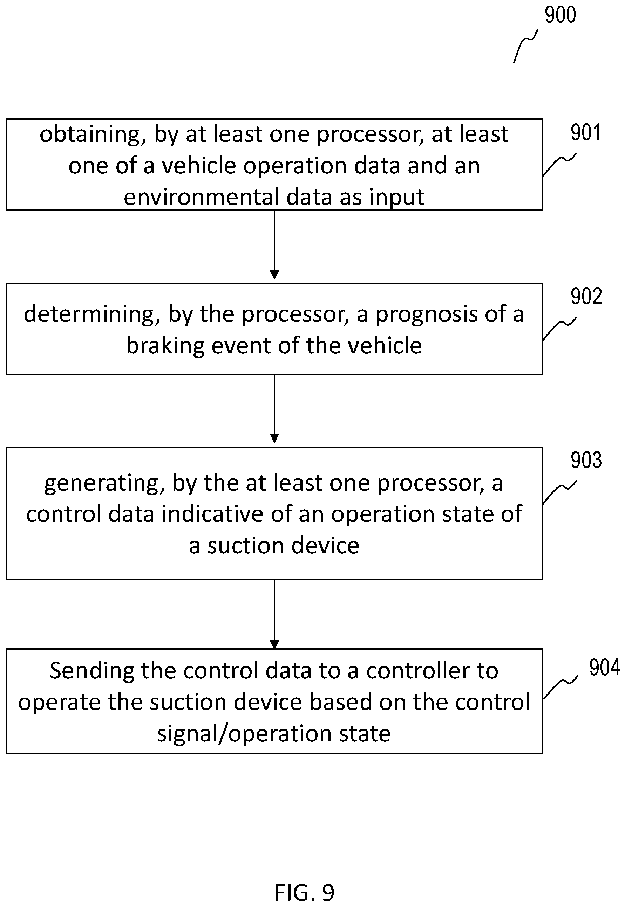

According to another aspect of the disclosure and with reference to FIG. 9, there is provided a method 900 of operating a filter system 100 for one or more braking devices 200 of a vehicle 600 to filter brake dust particles generated by the one or more braking devices 200, the method 900 comprising: obtaining 901, by at least one processor 150, at least one of a vehicle operation data 162 and an environmental data 164 as input; determining 902, by the at least one processor 150, a prognosis of a braking event of the vehicle as output; and generating 903, by the at least one processor 150, a control data 152 indicative of an operation state 711, 712, 713, 714, or 715 of a suction device 110, the control data 152 configured based on the prognosis of a braking event of the vehicle.

In some embodiments, the at least one control data 152 is sent to a controller 140, the controller 140 configured to operate the suction device 110 based on the control data 152. In some embodiments, the control data 152 may be converted to a motor drive electrical signal for driving a motor of the suction device.

The method 900 may be coded as a computer program/product for execution in the processor 150 and/or controller 140.

Although FIG. 9 shows example blocks of method 900, in some embodiments, two or more of the blocks of method 900 may be combined or performed in parallel.

In one general aspect, computer program product may include a computer program product. Other embodiments of this aspect include corresponding computer systems, apparatus, and computer programs recorded on one or more computer storage devices, each configured to perform the actions of the method 900.

According to another aspect of the disclosure, there is provided a computer program product, comprising software instructions installed thereon, such that when executed on the processor, executes the method of operating a filter system for one or more braking devices of a vehicle.

In some embodiments, the operation states may include an idle state, pre-conditioning state, a post-conditioning state, a full operation (suction) state.

In addition to the aforementioned sensors and/or sensor data, other possible sensor data that may be applicable to the present disclosure include acceleration sensors to determine longitudinal acceleration around a center position, emergency brake assistant data to determine a full operation intensity or load of the suction device, a flash data, a blind spot assistant data or lane departure warning active data, fan standby data, trailer detection data, blower set-up data, brake in more load data.

In some embodiments, the communication interface 412, 412A, 412B may be configured to obtain data from data sources such as Google data, Traffic Message Channel (TMC), live traffic (Car2Car) communication.

In some embodiments, wherein the vehicle is a train or a part thereof, e.g., a carriage (also named wagon), the communication interface may be configured to obtain data from and/or via a train signaling system, for example, European Train Control System ETCS, based on ETCS (like Chinese Train Control System (CTCS)) or similar. Such data may include information on track availability which may be used to estimate probability of braking.

The present disclosure provides an improved system for filtering brake dust particles generated by one or more braking devices of a vehicle. By determining a driving mode of the vehicle and a probability of braking, control strategies may be generated and/or selected. Each control strategy may include a plurality of operations state of the suction device which will determine a suitable filtering mode for the suction device based on the probability of braking event and vehicle driving mode. In some embodiments, the suction device, and therefore brake particle filter system, can be protected during adverse weather, pollution or other adverse conditions. In some embodiments, traffic information can be used to prepare the filter system for upcoming brake events.

The present disclosure provides for significant advantage regarding energy consumption and separation efficiency within a vehicle where the non-exhaust emissions needs to be controlled. For example, a regulatory emission limit requirement may be kept satisfied by discounting the absorbed brake dust from the total emissions.

While the disclosure has been particularly shown and described with reference to specific embodiments, it should be understood by those skilled in the art that various changes in form and detail may be made therein without departing from the scope of the disclosure as defined by the appended claims. The scope of the disclosure is thus indicated by the appended claims.

## Claims

1. A filter system (100) for one or more braking devices (200) of a vehicle, the filter system comprising:
a suction device (110) configured to generate an airflow (112) in a vicinity of the one or more braking devices (200);
a filter element (120) for filtering brake dust particles generated by the one or more braking devices (200);
an airflow channel (130) positioned to allow the airflow (112) generated by the suction device (110) through the filter element (120); a controller (140) for operating the suction device (110); and
at least one processor (150) arranged in data communication with the controller (140), the processor configured to receive at least one of a vehicle operation data (162) and an environmental data (164) as inputs, and determine a prognosis of a braking event of the vehicle as output;
wherein the at least one processor (150) is configured to generate a control data (152), the control data (152) indicative of an operation state of the suction device (110) based on the prognosis of the braking event of the vehicle.

2. The filter system (100) of claim 1, the system (100) comprises at least one sensor (160), the at least one sensor (160) arranged in data communication with the processor (150) and configured to obtain the vehicle operation data (162) and/or the environment data (164).

3. The filter system (100) of claims 1 or 2, wherein the at least one sensor (160) comprises at least one onboard sensor (620).

4. The filter system (100) of claim 3, wherein the at least one onboard sensor (620) comprises one or more of the following: a radar sensor (621), a light detection and ranging sensor (622), an optical sensor (623), an inclination sensor (624), an image sensor (625), a proximity sensor (626), a sonar sensor (627), a rain sensor (628) and a speed sensor (629).

5. The filter system (100) of claim 3 or 4, wherein the at least one onboard sensor (620) is used to obtain or derive a traffic data (671), a weather data (672), or a combination thereof.

6. The filter system (100) of any one of claims 3 to 5, wherein the at least one onboard sensor (620) is configured to obtain or derive at least one of the following data: an auto-navigation data (631), a driving assistance data (632), an anti-lock braking system data (623), an electric power steering data (624), a lane assistant data (635), a blind spot assistant data (636), a trailer condition data (627), a brake pedal level data (638), and a throttle level data (639).

7. The filter system (100) of any one of the preceding claims, wherein the at least one of the vehicle operation data (162) and the environmental data (164) is used to derive a first parameter indicative of whether the vehicle has deviated from an intended travel path, a second parameter indicative of whether the vehicle is in proximity with one or more objects, and a third parameter indicative of a vehicle speed or velocity, and wherein the third parameter is optionally used to derive an acceleration value.

8. The filter system (100) of claim 7, wherein upon a positive determination, based on any one of the following: that the first parameter exceeds a pre-determined deviation value; that the second parameter is less than a pre-determined distance with respect to the one or more objects; or that the third parameter exceeds a pre-determined acceleration or deceleration value; the prognosis of the braking event is determined to be a first probability value indicative of an imminent braking event.

9. The filter system (100) of claim 7, wherein upon a negative determination, based on any one of the following: that the first parameter is less than a pre-determined deviation value; that the second parameter is less than a pre-determined distance with respect to the one or more objects; or that the third parameter exceeds a pre-determined acceleration or deceleration value; the first parameter, the second parameter, or the third parameter is compared with a first, second or third range; and upon a positive determination that any one of the first parameter, the second parameter, or the third parameter is within the first, second or third range, the prognosis of the braking event is determined to be a second probability value indicative of an upcoming braking event.

10. The filter system (100) of claim 8 or 9, wherein the first probability value is at least 0.8, and the second probability value is in a range of 0.5 to 0.7.

11. The filter system (100) of claim 10, wherein the control data (152) associated with the first probability value is indicative of a full operation state (713) of the suction device (110).

12. The filter system (100) of claim 10, wherein the control data (152) associated with the first probability value is indicative of a pre-conditioning state (711) of the suction device (110).

13. The filter system (100) of any one of the preceding claims, wherein the one or more braking devices (200) comprise at least one frictional braking device (203, 203).

14. The filter system (100) of any one of the preceding claims, wherein the processor (150) comprises a brake probability estimator (151), the brake probability estimator (151) configured to receive the vehicle operation data (162) and/or the environmental data (164) to calculate or derive a probability value of the braking event of the vehicle, and to generate the control data (152) based on the probability value of the braking event.

15. A vehicle (600, 600A, 600B) comprising one or more braking devices (200) and a filter system (100) positioned in a vicinity of the one or more braking devices (200), the filter system (100) comprising a suction device (110) to generate an airflow (112) in a vicinity of the one or more braking devices (200), an airflow channel (130) positioned to direct airflow (112) generated by the suction device (110) through a filter element (120); the filter element (120) positioned to filter brake dust particles generated by the one or more braking devices (200) within the airflow (112), the filter system (100) comprising at least one processor (150); and a memory having instructions stored therein, the instructions, when executed by the at least one processor (150), causes the at least one processor (150) to: obtain at least one of a vehicle operation data (162) and an environmental data (164) as inputs, and determine a prognosis of a braking event of the vehicle; wherein the processor (150) is configured to generate a control data (152) indicative of an operation state (711, 712, 713, 714, 715) of the suction device (110), the control data (152) being based on the prognosis of the braking event of the vehicle (600, 600A, 600B).

16. A method (900) of operating a filter system (100) for one or more braking devices (200) of a vehicle to filter brake dust particles generated by the one or more braking devices (200), the method (900) comprising:
obtaining (901), by at least one processor (150), at least one of a vehicle operation data (162) and an environmental data (164) as input;
determining (902), by the at least one processor (150), a prognosis of a braking event of the vehicle; and
generating (903), by the at least one processor (150), a control data (152) indicative of an operation state (711, 712, 713, 714, 715) of a suction device (110) of the filter system (100), the control data (152) based on the prognosis of the braking event of the vehicle.

17. A computer program product, comprising software instructions installed thereon, such that when executed on a processor, executes the steps of the method (900).
